# EUROPEAN PATENT APPLICATION

(11) **EP 4 789 798 A1**
(43) Date of publication of application: **12.08.2026**
(21) Application number: 26152304.7
(22) Date of filing: 16.01.2026
(51) Int. Cl.: B23H 3/04, B23H 9/14, B22F 3/24

(54) **SYSTEMS AND METHODS FOR ELECTROCHEMICAL MACHINING OF ARTICLES PRODUCED BY ADDITIVE MANUFACTURING**

(30) Priority: 06.02.2025 IN 202511009859; 24.03.2025 US 202519088261
(71) Applicant: Honeywell International Inc., Charlotte, NC 28202 (US)
(72) Inventor: RAMADOSS, Muthukrishnan, Charlotte, 28202 (US); LASTRE, Henry A., Charlotte, 28202 (US); R, Mariappan, Charlotte, 28202 (US); KHATEI, Brajamohan, Charlotte, 28202 (US); SWIFT, Curtis, Charlotte, 28202 (US)
(74) Representative: Ingrassia, Fisher & Lorenz UK Ltd.

(57) **Abstract**

Systems and methods are provided for producing and machining an article produced by an additive manufacturing process. The systems include a tool, a fluid supply device configured to supply an electrolyte fluid through the tool to be dispensed adjacent thereto, a power supply device configured to provide a voltage to a circuit that includes the tool, the electrolyte fluid, and interior supports of the article, and a movement device configured to move the tool through an internal channel of the article. The tool, the fluid supply device, the power supply device, and the movement device are configured to operate, in combination, to perform an electrochemical machining (ECM) process to remove the interior supports when in sufficient proximity to the tool with the electrolyte fluid therebetween.

## Description

### CROSS REFERENCE TO RELATED APPLICATION

This application claims priority to India Provisional Patent Application No. 202511009859, filed February 6, 2025, the entire content of which is incorporated by reference herein.

### TECHNICAL FIELD

The present invention generally relates to additive manufacturing (AM) processes, and more particularly relates to systems, methods, and tools for removing interior features of articles produced by AM processes, wherein the interior features are not within a line-of-sight of an exterior of the articles and are removed by an electrochemical machining process.

### BACKGROUND

Components with relatively complex three-dimensional (3D) geometries raise difficult fabrication issues. Conventional fabrication techniques include forging, casting, and/or machining. Such conventional methods are not only expensive and have long lead times but may additionally have low yields. Development time and cost for certain components may also be magnified because such components generally require several iterations, including iterations as a result of intentional design decisions.

Additive manufacturing (AM) processes, such as laser powder bed fusion (LPBF) processes, have recently come to prominence as a cost-effective alternative to traditional manufacturing techniques. Additive manufacturing is defined by the American Society for Testing and Materials (ASTM) as the process of joining materials to make objects from three-dimensional (3D) model data, usually layer upon layer, as opposed to subtractive manufacturing methodologies, such as traditional machining and casting. In an AM process, a model, such as a design model, of the component may be defined in any suitable manner. For example, the model may be designed with computer aided design (CAD) software. The model may include 3D numeric coordinates of the entire configuration of the component including both external and internal surfaces. The model may include several successive 2D cross-sectional slices that together form the 3D component.

Existing AM processes may be limited in the types of components that can be produced. For example, components having internal features such as pathways and cavities may require temporary structural support elements to be formed simultaneously with the remainder of the component. These structural support elements provide support for the walls of the internal features during the AM process and thereby allow for larger internal features to be produced than would otherwise be possible. However, the structural support elements must typically be removed after completion of the AM process to allow the component to function as intended. If the internal features are not accessible for removal of the structural support elements, then it may not be possible or practical to produce the component with existing AM processes.

Accordingly, it is desirable to provide improved additive manufacturing techniques that are capable of removing internal structural support elements that are not readily accessible by existing systems and tools. Furthermore, other desirable features and characteristics of the present invention will become apparent from the subsequent detailed description of the invention and the appended claims, taken in conjunction with the accompanying drawings and this background of the invention.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In some examples, a method is provided that includes performing an additive manufacturing (AM) process to form an intermediate article that includes walls with interior surfaces that define a first opening, a second opening, an elongated internal channel extending therebetween, and to form interior supports within the internal channel configured to structurally support the interior surfaces during the AM process, wherein a first portion of the interior surfaces is not within a line-of-sight of either of the first opening and the second opening, and performing an electrochemical machining (ECM) process to remove the interior supports disposed within the internal channel. The ECM process includes inserting a first end of a tool into the first opening of the intermediate article, supplying an electrolyte fluid through the tool to be dispensed within the internal channel adjacent to the first end of the tool, providing a voltage to a circuit that includes a conductive region of the tool, the electrolyte fluid, and at least the interior supports of the intermediate article, and moving the tool through the internal channel toward the second opening and past the first portion of the interior surfaces. The ECM process is performed in a manner that causes the conductive region of the tool to function as a cathode, at least portions the interior supports to function as an anode, and the interior supports to be dissolved by an electro-chemical reaction when in sufficient proximity to the conductive region of the tool with the electrolyte fluid therebetween.

In some examples, a system is provided that includes a tool having a first end configured to be inserted into a first opening of an intermediate article, wherein the intermediate article includes walls having interior surfaces that define the first opening, a second opening, an elongated internal channel extending therebetween, and interior supports within the internal channel that structurally support the interior surfaces during an additive manufacturing (AM) process that produced the intermediate article, wherein a portion of the interior surfaces is not within line-of-sight of either of the first opening and the second opening, a fluid supply device configured to supply an electrolyte fluid through the tool to be dispensed adjacent to a conductive region of the tool, a power supply device configured to provide a voltage to a circuit that includes the conductive region of the tool, the electrolyte fluid, and at least the interior supports, and a movement device configured to move the tool through the internal channel of the intermediate article from the first opening to the second opening. The tool, the fluid supply device, the power supply device, and the movement device are configured to operate, in combination, to perform an electrochemical machining (ECM) process to remove the interior supports disposed within the internal channel in a manner that causes the conductive region of the tool to function as a cathode, at least the interior supports to function as an anode, and the interior supports to be dissolved by an electro-chemical reaction when in sufficient proximity to the conductive region of the tool with the electrolyte fluid therebetween.

Furthermore, other desirable features and characteristics of the method and system will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a flowchart illustrating an exemplary method for producing an article in accordance with an embodiment;
FIG. 2 schematically represents a system for performing an additive manufacturing process to produce an article in accordance with an embodiment;
FIGS. 3-6 includes various views schematically representing an exemplary article produced by an additive manufacturing process in accordance with an embodiment;
FIG. 7 is a perspective view schematically representing an exemplary tool for producing an article in accordance with an embodiment;
FIG. 8 is a cut-away view schematically representing the tool of FIG. 7 disposed within the article of FIGS. 3-6 in accordance with an embodiment; and
FIG. 9 is a cross-sectional view schematically representing a system comprising the tool of FIG. 7 while performing an electro-chemical machining process on the article of FIGS. 3-6 in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Various embodiments are directed to methods for manufacturing components from articles formed by an additive manufacturing (AM) process. As used herein, the term additive manufacturing refers to any process wherein thin successive layers of material are laid down atop one another to form an article. AM processes can be used to produce articles of manufacture having complex geometries in a single operation with no tooling. Additive manufacturing technology allows for the article to be produced at a net-shape or near-net shape without the application of the heating, casting, or forging processes commonly used in the prior art.

Systems and methods disclosed herein provide for producing articles that may not otherwise be producible using existing AM techniques. In various examples, the systems and methods disclosed herein provide for producing articles having internal features, such as pathways and cavities, that are supported by temporary structural support elements. Upon completion of the AM process, these structural support elements may be removed using an electro-chemical machining (ECM) process that is capable of controllably and selectively removing the structural support elements, even those that are not within a line-of-sight of the exterior of the article.

In addition, components manufactured from AM processes may have a surface roughness that, depending on the application, may require post-processing to achieve a desired surface finish. However, challenges may arise when performing surface finishing processes on surfaces of components that are not within a line-of-sight of the exterior of the component, such as hidden portions of tortuous pathways or cavities within an article. In various examples, the systems and methods disclosed herein may provide for performing controlled surface finishing using an ECM process on surfaces of an article that are not within a line-of-sight of the exterior of the article.

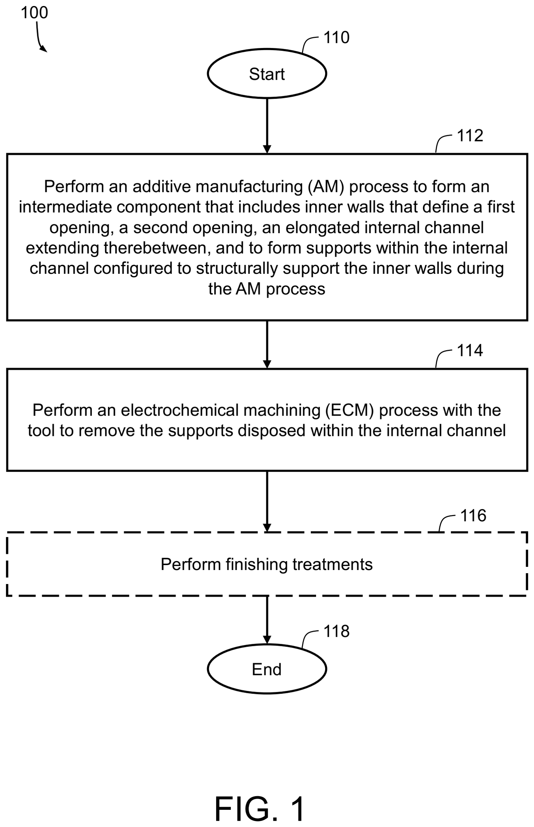

FIG. 1 is a flowchart illustrating a nonlimiting method 100 for manufacturing an article using AM techniques. The method 100 may start at 110. At 112, the method 100 may include performing an AM process to form the article. In some examples, a model, such as a design model of the article may be defined in any suitable manner. For example, the model may be designed with computer aided design (CAD) software and may include three-dimensional ("3D") numeric coordinates of the entire configuration of the component including both external and internal surfaces. In one exemplary embodiment, the model may include several successive two-dimensional ("2D") cross-sectional slices that together form the 3D component.

The method 100 may include forming the article according to the model generated. In one exemplary embodiment, the entire component is formed using a rapid prototyping or additive layer manufacturing process. Some examples of additive layer manufacturing processes include: selective laser sintering in which a laser is used to sinter a powder media in precisely controlled locations; laser wire deposition in which a wire feedstock is melted by a laser and then deposited and solidified in precise locations to build the product; electron beam melting; laser engineered net shaping; and direct metal deposition. Other additive manufacturing processes may also be employed.

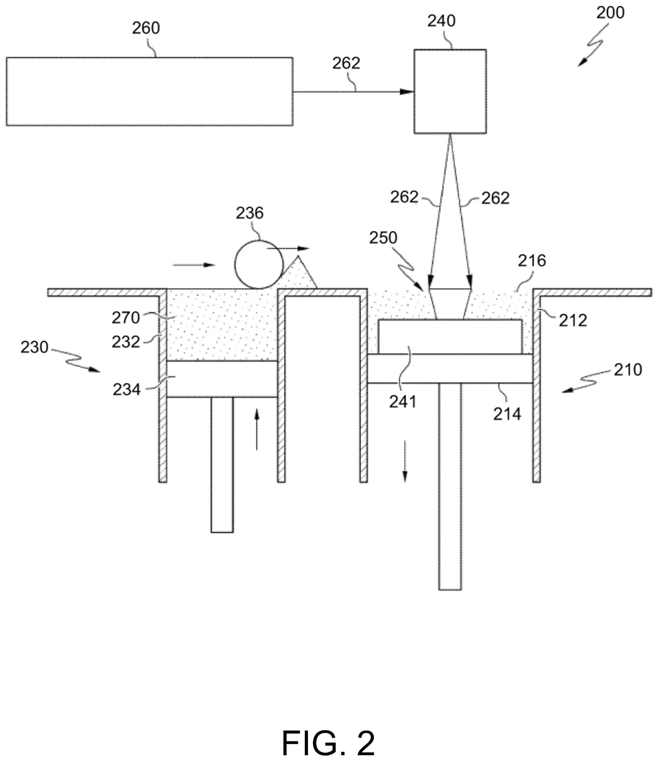

In one particular exemplary embodiment, direct metal laser fusion (DMLF) is used to produce the article at 112. DMLF is a commercially-available, laser-based rapid prototyping and tooling process by which complex parts may be directly produced by precision melting and solidification of metal powder into successive layers of larger structures, each layer corresponding to a cross-sectional layer of the 3D component. However, prior to a discussion of the subsequent method steps, reference is made to FIG. 2, which is a schematic view of a DMLF system 200 for manufacturing the article in accordance with an exemplary embodiment.

Referring to FIG. 2, the system 200 includes a fabrication device 210, a powder delivery device 230, a scanner 240, and a laser 260 that function to manufacture the article 250 with build material 270. The fabrication device 210 includes a build container 212 with a fabrication support 214 on which the article 250 is formed and supported. The fabrication support 214 is movable within the build container 212 in a vertical direction and is adjusted in such a way to define a working plane 216. The delivery device 230 includes a powder chamber 232 with a delivery support 234 that supports the build material 270 and that is also movable in the vertical direction. The delivery device 230 further includes a roller or wiper 236 that transfers build material 270 from the delivery device 230 to the fabrication device 210.

During operation, a base block 241 may be installed on the fabrication support 214. The fabrication support 214 is lowered and the delivery support 234 is raised. The roller or wiper 236 scrapes or otherwise pushes a portion of the build material 270 from the delivery device 230 to form the working plane 216 in the fabrication device 210. The laser 260 emits a laser beam 262, which is directed by the scanner 240 onto the build material 270 in the working plane 216 to selectively fuse the build material 270 into a cross-sectional layer of the article 250 according to the design. More specifically, the speed, position, and other operating parameters of the laser beam 262 are controlled to selectively fuse the powder of the build material 270 into larger structures by rapidly melting the powder particles that may melt or diffuse into the solid structure below, and subsequently, cool and re-solidify. As such, based on the control of the laser beam 262, each layer of build material 270 may include unfused and fused build material 270 that respectively corresponds to the cross-sectional passages and walls that form the article 250. In general, the laser beam 262 is relatively low power to selectively fuse the individual layer of build material 270. As an example, the laser beam 262 may have a power of approximately 50 to 500 Watts, although any suitable power may be provided.

Upon completion of a respective layer, the fabrication support 214 is lowered and the delivery support 234 is raised. Typically, the fabrication support 214, and thus the article 250, does not move in a horizontal plane during this step. The roller or wiper 236 again pushes a portion of the build material 270 from the delivery device 230 to form an additional layer of build material 270 on the working plane 216 of the fabrication device 210. The laser beam 262 is movably supported relative to the article 250 and is again controlled to selectively form another cross-sectional layer. As such, the article 250 is positioned in a bed of build material 270 as the successive layers are formed such that the unfused and fused material supports subsequent layers. This process is continued according to the modeled design as successive cross-sectional layers are formed into the completed desired portion, e.g., the component at 114 of the method 100.

The delivery of build material 270 and movement of the article 250 in the vertical direction are relatively constant and only the movement of the laser beam 262 is selectively controlled to provide a simpler and more precise implementation. The localized fusing of the build material 270 enables more precise placement of fused material to reduce or eliminate the occurrence of over-deposition of material and excessive energy or heat, which may otherwise result in cracking or distortion. The unused and unfused build material 270 may be reused, thereby further reducing scrap. Any suitable laser and laser parameters may be used, including considerations with respect to power, laser beam spot size, and scanning velocity.

The build material 270 is provided as a metallic alloy in powder form. As used herein, the term "metallic alloy" refers to any alloy wherein a specific or individual metallic material is the single greatest constituent thereof, as measured on a weight percentage basis. For example, an "aluminum alloy" may include the class of alloys where aluminum consists of a majority of the alloy, as measured on a weight percentage basis. Non-limiting examples of such metallic alloys include aluminum alloys, nickel alloys, and iron alloys. Other alloys may also be employed as are well-known to those having ordinary skill in the art. The rapid solidification rates at which these metallic alloys are deposited, layer-by-layer, allow for the creation of unique microstructures using various additive elements that could not be realized using ordinary cast/wrought alloy techniques.

In general, the powder build material 270 may be selected based on one or more of strength, durability, and useful life, particularly at high temperatures, although it should be appreciated that the powder build material 270 may also be selected based on the intended function of the article being formed. The powdered form of the alloy may be produced by combining the various constituents (metals and other elements) of the alloy into a mixture, melting the mixture, and atomizing the melted mixture to form a powder, a process which is well-known in the art.

Returning again to FIG. 1, at the completion of forming the article, the article may be given a stress relief treatment (if necessary), and then removed from the additive manufacturing system (e.g., from the DMLF system 200). At this stage, the article may have significant surface roughness caused, for example, by partial fusion or entrainment of metallic powder as the laser starts or stops its traverse or sweep at the edges of each deposit layer, and by contamination, debris, oxidation, or the like. The article may also have structural support elements supporting one or more external and/or internal features of the article that may need to be removed.

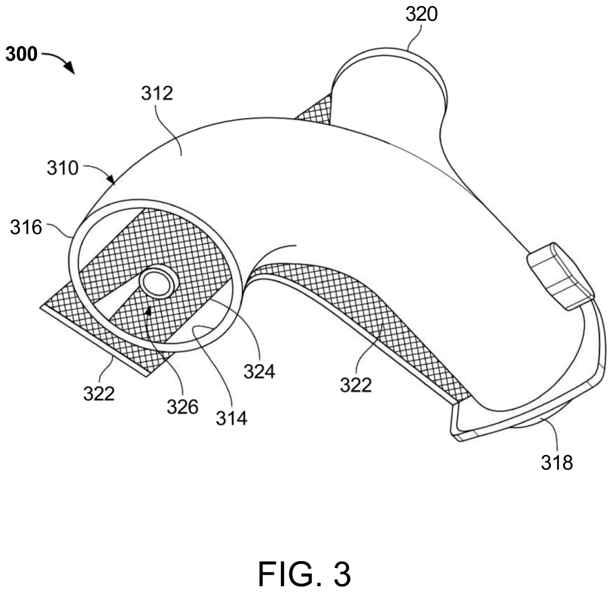

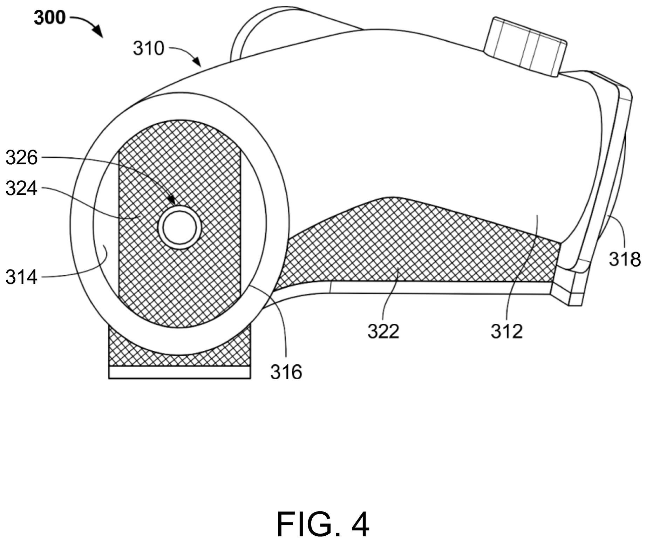

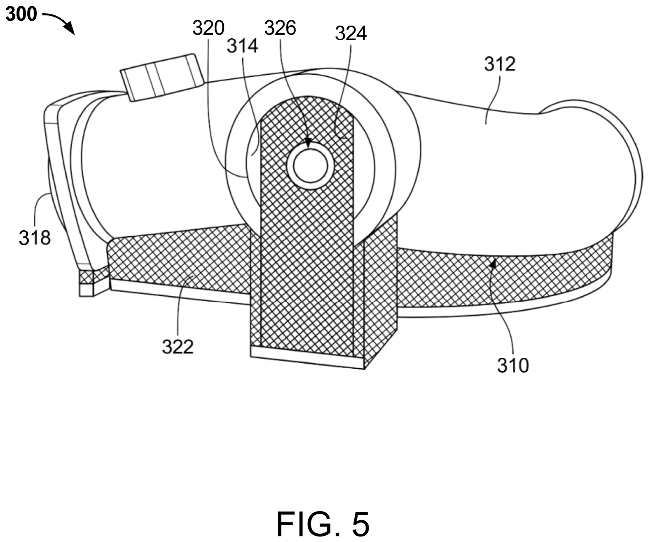

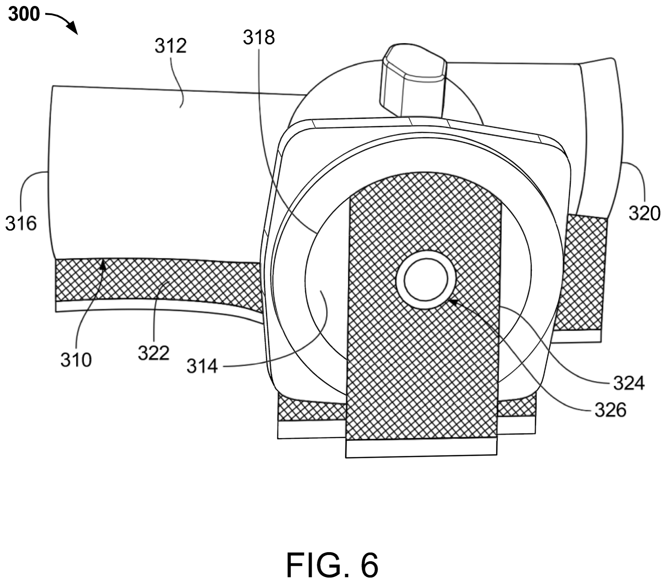

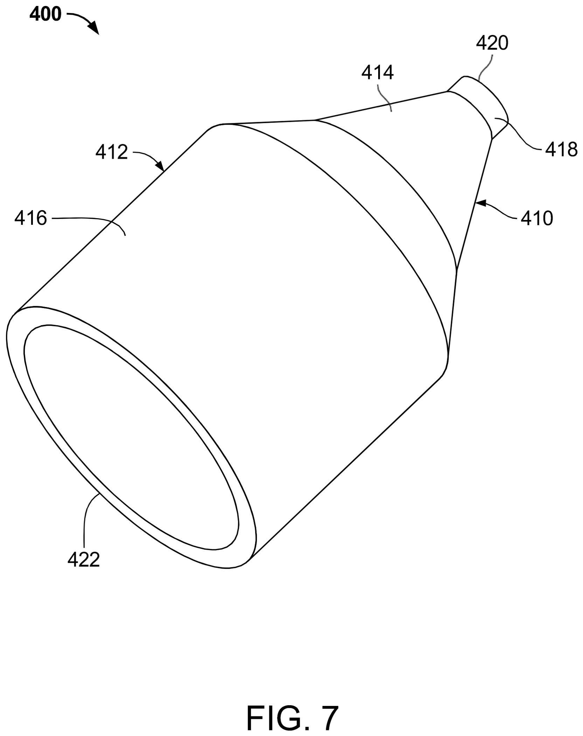

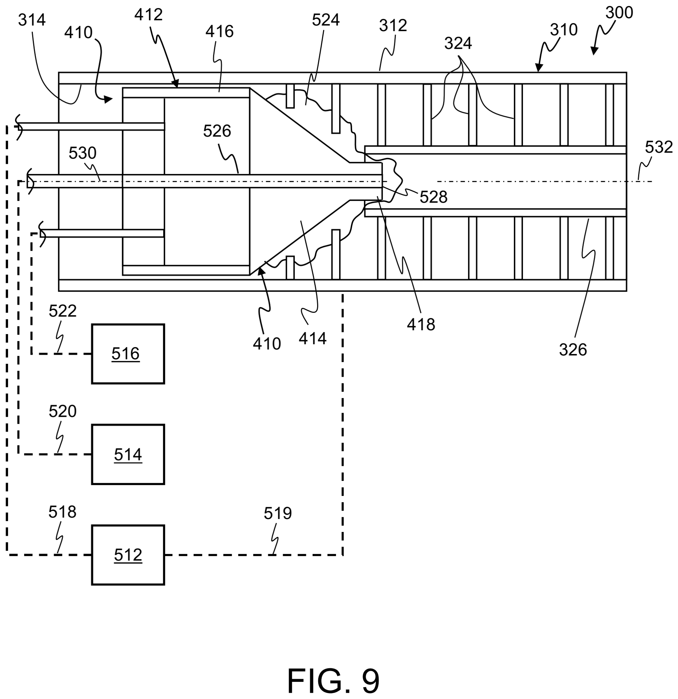

At 114, the article formed may undergo an ECM process to remove internal structural support elements and, optionally, reduce the surface roughness of the internal features. Certain aspects of the ECM process will be described in reference to an exemplary article 300 represented in FIGS. 3-6, 8, and 9, an exemplary tool 400 represented in FIGS. 7-9, and an exemplary system 500 represented in FIG. 9. However, the systems and methods disclosed herein are not limited to the article 300, the tool 400, or the system 500, and may be used to produce articles having other structures with tools having other configurations.

Referring to FIGS. 3-6, the article 300 is an intermediate article of a tubular component produced by an AM process, such as by the method 100 with the system 200. The article 300 includes a body 310 having walls with exterior surfaces 312 and interior surfaces 314. A first opening 316, a second opening 318, and a third opening 320 in the body 310 each provide access to an elongated internal channel defined by the interior surfaces 314 of the walls. In this example, the internal channel extends between and provides fluidic communication between the first opening 316, the second opening 318, and the third opening 320. The internal channel includes a first path extending between the first opening 316 and the second opening 318, and a second path extending between the second opening 318 and the third opening 320. The first and second path meet at a fork in the internal channel. First portions of the walls that define the first path include a first bend, and second portions of the walls that define the second path include a second bend. As such, it should be evident to those skilled in the art that the tubular component intended to be produced from the article 300 is a Y-shaped fitting or portion of a pipe configured to receive and direct a fluid through the internal channel.

At this stage in the manufacturing process, the article 300 may include external structural support elements 322 (also referred to as external supports 322) configured to support some of the exterior surfaces 312 of the walls and internal structural support elements 324 (also referred to as interior supports 324) configured to support some of the interior surfaces 314 of the walls. Both the external supports 322 and the interior supports 324 functioned to structurally support their respective portions of the walls during the AM process, and since the AM process is complete can now be removed.

Notably, at least some of the interior supports 324 and/or interior surfaces 314 of the walls connected thereto may not be within a direct line-of-sight of any of the first opening 316, the second opening 318, and the third opening 320 in the body 310, in this example due to the first bend and the second bend. Therefore, removal of at least some of the interior supports 324 may be impossible or impractical using certain light-of-sight tools, that is, tools that are configured to interact with surfaces of an article that are directly viewable (i.e., not hidden). In some examples, first bend and/or the second bend may have a bend radius of equal to or greater than one inch (i.e., 2.54 cm).

The article 300 may include a guide tube 326 embedded within and supported by the interior supports 324. The guide tube 326 extends through the internal channel between the first opening 316, the second opening 318, and the third opening 320 in the body 310. The guide tube 326 is configured to guide or direct the tool 400 through the internal channel during the ECM process, as will be described in more detail below.

Referring now to FIG. 7-9, the tool 400 includes a first portion 410 that includes at least one electrically conductive region 414 configured to function as a cathode during an ECM process and may include a second portion 412 that includes an electrically non-conductive region 416 configured to reduce a likelihood of contact occurring between the conductive region 414 of the tool 400 and the interior surfaces 314 of the walls of the article 300 while performing the ECM process. In some examples, the first portion 410 may define a first end 420 of the tool 400. In some examples, the second portion 412 may define a second end 422 of the tool 400. In some examples, the second portion 412 may have an exterior shape that is complimentary to the internal channel of the article 300. For example, the internal channel may be cylindrical having an inner diameter between the interior surfaces 314, and the second portion 412 of the tool 400 may be cylindrical having an outer diameter that is less than the inner diameter of the internal channel. In some examples, the tool 400 may not include the non-conductive region 416.

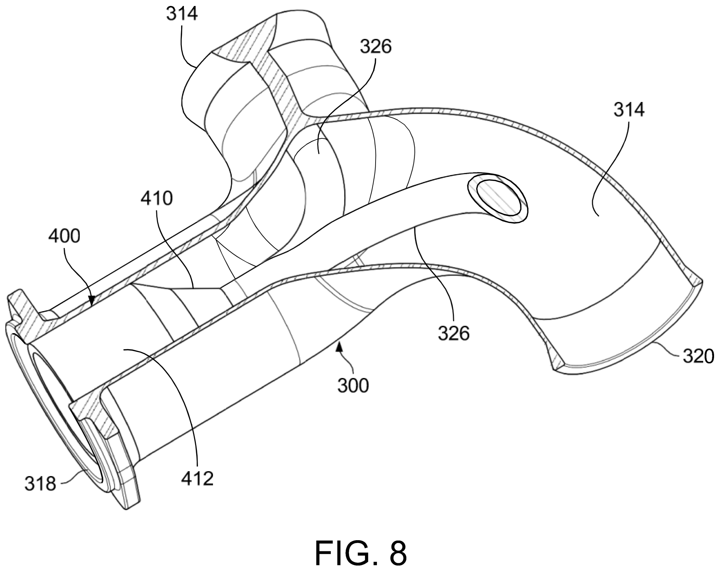

In the example of FIGS. 7-9, the first portion 410 has a substantially conical shape, wherein the outer diameter thereof decreases in a direction from the second portion 412 to a tip 418 of the tool 400. An entirety of the first portion 410 is formed of an electrically conductive material (e.g., certain metallic materials) that defines the conductive region 414. The second portion 412 has a substantially cylindrical shape with a substantially constant outer diameter. An entirety of the second portion 412, or at least outer surfaces thereof, is formed of an electrically non-conductive material (e.g., certain polymeric materials) that defines the non-conductive region 416. With this structure, the tool 400 is configured to be received within the internal channel of the article 300, as represented in FIGS. 8 and 9. The external supports 322 and the interior supports 324 are omitted from FIGS. 8 and 9 for clarity.

The tool 400 may be a component of a system configured to perform an ECM process on the article 300 using the tool 400. FIG. 9 represents an exemplary system 500 that includes the tool 400, a power supply device 512, a fluid supply device 514, and a movement device 516. The power supply device 512 is configured to provide a voltage to an electrical circuit that includes the conductive region 414 of the tool 400, an electrolyte fluid 524 (i.e., conductive medium), and the article 300. For example, the power supply device 512 may be a generator, a motor or engine, a battery, or another device capable of providing a voltage sufficient to perform an ECM process. In some examples, a negative terminal of the power supply device 512 may be electrically connected to the conductive region 414 of the tool 400 with a first electrical wire 518 and a positive terminal of the power supply device 512 may be electrically connected to the article 300 via a second electrical wire 519. The fluid supply device 514 is configured to supply an electrolyte fluid 524 through the tool 400 to be dispensed adjacent to the conductive region 414 of the tool 400. For example, the fluid supply device 514 may be a pump or other source of the electrolyte fluid 524 that is configured to provide the electrolyte fluid 524 through a fluid tube 520 coupled to the tool 400, through an internal passage 526 of the tool 400, and dispensed from an outlet 528 of the tool 400. The outlet 528 is configured to direct the electrolyte fluid 524 to be dispensed between the conductive region 414 of the tool 400 and the interior supports 324 during the ECM process. The movement device 516 is configured to move the tool 400 through the internal channel of the article 300 between the openings 316, 318, 320 such as, for example, between the first opening 316 and the second opening 318. In some examples, the movement device 516 may be configured to apply a force against the tool 400 via the first electrical wire 518, the fluid tube 520, or another flexible or semiflexible member 522.

Referring again to FIG. 1, at 114 the method 100 may include inserting the first end 420 of the tool 400 into the first opening 316 of the article 300. In some examples, the tool 400 may be positioned such that the tip 418 thereof interacts with the guide tube 326 in a manner that provides for the guide tube 326 guiding the tool 400 through the internal channel during the ECM process. For example, the tip 418 of the tool 400 may be received within the guide tube 326, or alternatively the guide tube 326 may be received within an opening of the tip 418 of the tool 400. For examples in which the guide tube 326 receives the tip 418 of the tool 400, the guide tube 326 may include a first opening, a second opening, and a hallow channel extending therebetween.

Once positioned, the method 100 may proceed with the ECM process by supplying the electrolyte fluid 524 through the tool 400 with the fluid supply device 514 to be dispensed within the internal channel adjacent to the conductive region 414 of the tool 400, providing a voltage with the power supply device 512, and moving the tool 400 through the internal channel with the movement device 516 toward, for example, the second opening 318 and past the first portion of the interior surfaces 314. In the example of FIGS. 7-9, the electrolyte fluid 524 is directed from the fluid supply device 514, through the fluid tube 520, through the internal passage 526 of the tool 400, and out of the outlet 528 at the tip 418 of the tool 400. A voltage is produced by the power supply device 512 such that a current flows through the circuit that includes the first portion 410 of the tool 400 and the article 300, and the movement device 516 pushes the tool 400 into the internal channel of the article 300.

The parameters of the ECM process may be performed in a manner that causes the conductive region 414 of the tool 400, the article 300 (or at least the interior supports 324), and the electrolyte fluid 524 to define an electro-chemical cell. Specifically, the conductive region 414 of the tool 400 functions as a cathode (negatively-charged), the article 300 (or at least the interior supports 324) functions as an anode (positively-charged), and the interior supports 324 are dissolved by an electro-chemical reaction when in sufficient proximity to the conductive region 414 of the tool 400 with the electrolyte fluid 524 therebetween. As electrons cross the gap from the tool 400 to the article 300, the electro-chemical reaction oxidizes the material from the article 300 forming a metal hydroxide which dissolves in and is carried away in the electrolyte fluid 524.

As the interior supports 324 adjacent to the conductive region 414 of the tool 400 dissolve, the tool 400 may progress further into and/or through the internal channel, be positioned in proximity to subsequent interior supports 324, and continue the ECM process. During movement of the tool 400, the guide tube 326 guides the tool 400 through the internal channel. In some examples, the guide tube 326 may be configured to substantially maintain an alignment between a longitudinal axis 530 of the tool 400 and a central axis 532 of the internal channel. In this manner, exterior surfaces of the tool 400, in this instance the outermost surfaces of the second portion 412 of the tool 400 may be maintained at a substantially constant, and uniform radial distance from the interior surfaces 314 of the walls of the article 300. In some examples, the non-conductive region 416 of the tool 400 (e.g., the second portion 412) may be configured to contact the interior surfaces 314 of the article 300. In such examples, the non-conductive region 416 may function as a barrier such that the electrolyte fluid 524 is restricted from passing between the non-conductive region 416 and the interior surfaces 314 in the internal channel.

In some examples, maintaining a constant or minimum gap between the tool 400 and the interior surfaces 314 of the walls of the article 300 may reduce or eliminate unintentional removable of material from the walls of the article 300 during the ECM process. In some examples, radially outermost surfaces of the conductive region 414 of the tool 400 may be configured to be maintained (by the guide tube 326) at a predetermined radial distance from the interior surfaces 314 of the walls such that a predetermined amount of material is removed from the interior surfaces 314. In this manner, the tool 400 may be configured to perform a surface finishing process on the interior surfaces 314 of the walls to define a finished surface thereon, either as a step separate from the internal support removal process or while simultaneously removing the interior supports 324. For example, some AM processes may result in a surface Arithmetic Average Roughness (Ra) of about 5 to 8 micrometers (µm). In such examples, the tool 400 may be configured to remove a sufficient amount of material from the interior surfaces 314 of the walls to yield a surface roughness (Ra) of about 1 to 2 µm.

In some examples, the guide tube 326 is dissolved during the ECM process. For example, the interior supports 324, the guide tube 326, and optionally the interior surfaces 314 of the walls may be formed of the same conductive material. With such configuration, all of the interior supports 324 and the guide tube 326 that are negatively-charged may be simultaneously removed as the tool 400 travels through the internal channel. If the interior surfaces 314 of the walls are the same material as well and negatively-charged, the interior surfaces 314 may undergo surface polishing concurrently with the removal of the interior supports 324 and the guide tube 326. FIG. 10 represents a partial, cross-sectional view of the article 300 during the ECM process using the tool 400. In FIG. 10, the tool 400 is moving through the internal channel and being guided by the guide tube 326. As portions of the interior supports 324 and the guide tube 326 come within proximity of the conductive region 414 of the tool 400, these adjacent portions are dissolved. In this manner, the interior supports 324 and the guide tube 326 are progressively dissolved as the tool 400 moves through the internal channel.

Referring again to FIG. 1, at 116 the method 100 may include performing one or more finishing treatments on the article 300. Finishing treatments may include, for example, polishing, peening, and/or the application of coatings. If necessary, the article 300 may be machined to final specifications. The article 300, produced using AM techniques, has a layer-by-layer fused microstructure that exhibits anisotropic mechanical and physical properties. It should be noted that these "finishing treatments" of optional step 116, if present, are performed separately from and in addition to any plating, diffusing, stripping, and HIP procedures. In some examples, the finishing treatments may include one or more processes configured to remove the external supports 322.

The method 100 may end at 118.

The systems and methods disclosed herein provide various benefits over certain existing systems and methods. For example, the systems and methods provide for removal of interior features of an article produced by an AM process, such as interior supports, and/or surface polishing of interior surfaces of the article even at portions that are not within a line-of-sight of an exterior of the article. In this manner, articles may be produced in a series of method steps that would not otherwise be possible or practical with existing methods.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method, comprising:
performing an additive manufacturing (AM) process to form an intermediate article that includes walls with interior surfaces that define a first opening, a second opening, an elongated internal channel extending therebetween, and to form interior supports within the internal channel configured to structurally support the interior surfaces during the AM process, wherein a first portion of the interior surfaces is not within a line-of-sight of either of the first opening and the second opening; and
performing an electrochemical machining (ECM) process to remove the interior supports disposed within the internal channel, wherein the ECM process includes:
inserting a first end of a tool into the first opening of the intermediate article;
supplying an electrolyte fluid through the tool to be dispensed within the internal channel adjacent to the first end of the tool;
providing a voltage to a circuit that includes a conductive region of the tool, the electrolyte fluid, and at least the interior supports of the intermediate article; and
moving the tool through the internal channel toward the second opening and past the first portion of the interior surfaces,
wherein the ECM process is performed in a manner that causes the conductive region of the tool to function as a cathode, at least portions the interior supports to function as an anode, and the interior supports to be dissolved by an electro-chemical reaction when in sufficient proximity to the conductive region of the tool with the electrolyte fluid therebetween.

2. The method of claim 1, wherein performing the AM process includes forming a guide tube that extends through the internal channel of the intermediate article from the first opening to the second opening and that is supported by the interior supports, wherein the method includes guiding the tool through the internal channel with the guide tube while performing the ECM process.

3. The method of claim 2, wherein the guide tube is dissolved during the ECM process, wherein the interior surfaces, the interior supports, and the guide tube are formed of the same material.

4. The method of claim 2, wherein the guide tube includes a first opening, a second opening, and a hallow channel extending therebetween, wherein inserting the first end of the tool into the first opening of the intermediate article includes positioning a tip of the first end of the tool within the first opening of the guide tube, wherein supplying the electrolyte fluid through the tool includes supplying the electrolyte fluid through a fluid tube to an outlet disposed at the tip of the tool.

5. The method of claim 2, wherein supplying the electrolyte fluid through the tool includes supplying the electrolyte fluid through a fluid tube to an outlet of the tool, wherein the outlet is configured to direct the electrolyte fluid to be dispensed between the conductive region of the tool and the interior supports during the ECM process.

6. The method of claim 1, further comprising, during the ECM process, positioning the tool to provide a gap between the conductive region of the tool and the interior surfaces of the intermediate article that has a predetermined dimension configured to remove a predetermined amount of material from the interior surfaces to define a finished surface thereon.

7. The method of claim 1, wherein the internal channel includes at least one bend having a bend radius of equal to or greater than 1 inch, further comprising producing the tool to include a non-conductive region that is configured to reduce a likelihood of contact occurring between the conductive region of the tool and the interior surfaces of the intermediate article while performing the ECM process.

8. A system, comprising:
a tool having a first end configured to be inserted into a first opening of an intermediate article, wherein the intermediate article includes walls having interior surfaces that define the first opening, a second opening, an elongated internal channel extending therebetween, and interior supports within the internal channel that structurally support the interior surfaces during an additive manufacturing (AM) process that produced the intermediate article, wherein a portion of the interior surfaces is not within line-of-sight of either of the first opening and the second opening;
a fluid supply device configured to supply an electrolyte fluid through the tool to be dispensed adjacent to a conductive region of the tool;
a power supply device configured to provide a voltage to a circuit that includes the conductive region of the tool, the electrolyte fluid, and at least the interior supports; and
a movement device configured to move the tool through the internal channel of the intermediate article from the first opening to the second opening,
wherein the tool, the fluid supply device, the power supply device, and the movement device are configured to operate, in combination, to perform an electrochemical machining (ECM) process to remove the interior supports disposed within the internal channel in a manner that causes the conductive region of the tool to function as a cathode, at least the interior supports to function as an anode, and the interior supports to be dissolved by an electro-chemical reaction when in sufficient proximity to the conductive region of the tool with the electrolyte fluid therebetween.

9. The system of claim 8, wherein the intermediate article includes a guide tube that extends through the internal channel from the first opening to the second opening and that is supported by the interior supports, wherein the tool is configured to be guided through the internal channel with the guide tube during the ECM process.

10. The system of claim 9, wherein the tool, the fluid supply device, the power supply device, and the movement device are configured to operate, in combination, to cause the guide tube to be dissolved during the ECM process.

11. The system of claim 9, wherein the guide tube includes a first opening, a second opening, and a hallow channel extending therebetween, wherein a tip of the first end of the tool is configured to be inserted into the first opening of the guide tube, wherein the fluid supply device is configured to supply the electrolyte fluid through a fluid tube to an outlet disposed at the tip of the tool.

12. The system of claim 9, wherein the fluid supply device is configured to supply the electrolyte fluid through a fluid tube to an outlet of the tool, wherein the outlet is configured to direct the electrolyte fluid to be dispensed between the conductive region of the tool and the interior supports during the ECM process.

13. The system of claim 8, wherein the tool is configured to provide a gap between the conductive region of the tool and the interior surfaces of the intermediate article during the ECM process that has a predetermined dimension configured to remove a predetermined amount of material from the interior surfaces to define a finished surface thereon.

14. The system of claim 8, wherein the tool is configured to move through the internal channel about at least one bend thereof having a bend radius of equal to or greater than 1 inch, wherein the tool includes a non-conductive region that is configured to reduce a likelihood of contact occurring between the conductive region of the tool and the interior surfaces of the intermediate article during the ECM process.

15. The system of claim 8, wherein the first end of the tool has a conical shape and at least part of the first end defines the conductive region, wherein the tool includes a non-conductive region having a cylindrical shape, and wherein the internal channel defined by the interior surfaces of the intermediate article has a tubular shape, wherein the non-conductive region is configured to contact the interior surfaces of the intermediate article during the ECM process in a manner that restricts flow of the electrolyte fluid between the non-conductive region and the interior surfaces.
